# EUROPÄISCHE PATENTANMELDUNG

(11) **EP 1 748 301 A2**
(43) Veröffentlichungstag der Anmeldung: **31.01.2007**
(21) Anmeldenummer: 06116306.9
(22) Anmeldetag: 29.06.2006
(51) Int. Cl.: G01S 5/02

(54) **Verfahren zur Bestimmung einer Relativposition einer mobilen Einheit durch Vergleichen von Scans einer Umgebung und mobile Einheit**

(30) Priorität: 29.07.2005 DE 102005035746
(71) Anmelder: SIEMENS AKTIENGESELLSCHAFT, 80333 München (DE)
(72) Erfinder: Fiegert, Michael, 81739 München (DE); Soika, Martin, 84028 Landshut (DE)

(57) **Zusammenfassung**

Bei dem Verfahren zur Bestimmung einer Relativposition einer mobilen Einheit durch Vergleich von Scans einer Umgebung werden fortlaufend Scans einer Umgebung der mobilen Einheit durch einen Abstandssensor aufgenommen und in einem Speicher abgelegt. Weiterhin vergleicht eine Recheneinheit einen ersten Scan mit einem zweiten Scan, wobei eine Relativposition der mobilen Einheit zum Zeitpunkt des zweiten Scans gegenüber einer Position zum Zeitpunkt des ersten Scans bestimmt wird. Das Verfahren ist dadurch gekennzeichnet, dass die Recheneinheit den ersten Scan iterativ mit folgenden Scans vergleich, wobei eine neue Relativposition der mobilen Einheit zum Zeitpunkt des jeweiligen folgenden Scans gegenüber der Position zum Zeitpunkt des ersten Scans bestimmt wird und wobei die jeweils zuletzt ermittelte Relativposition als a-priori-Information berücksichtigt wird.

## Beschreibung

Die Erfindung betrifft die Bestimmung einer Relativposition einer mobilen Einheit durch Vergleich von Scans einer Umgebung. Bei der mobilen Einheit kann es sich beispielsweise um ein Fahrzeug, etwa einen Gabelstapler oder Roboter handeln.

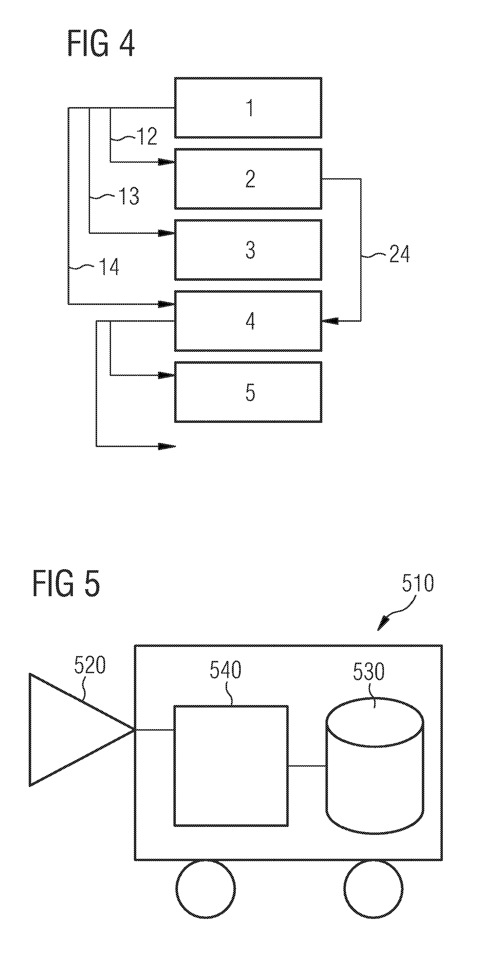

Figur 5 zeigt eine mobile Einheit 510. Die mobile Einheit 510 verfügt über einen Abstandssensor 520, einen Speicher 530 sowie eine Recheneinheit 540. Der Abstandssensor 520 kann etwa ein Laserscanner oder ein Ultraschallsensor sein. Vergleichbare Technologien sind ebenfalls möglich.

Die durch den Abstandssensor 520 aufgenommenen Scans einer Umgebung der mobilen Einheit 510 werden im Speicher 530 abgelegt und durch die Recheneinheit 540 verarbeitet.

Die im Folgenden beschriebenen Eigenschaften von Scans und Methoden des Scanmatching sind dem Fachmann wohlbekannt und insbesondere auch der Veröffentlichung Gutmann, Jens-Steffen: Robuste Navigation autonomer mobiler Systeme, Dissertationen zur künstlichen Intelligenz, Band 241, Berlin: Akademische Verlagsgesellschaft Aka GmbH, 2000, Seite 21-88, zu entnehmen.

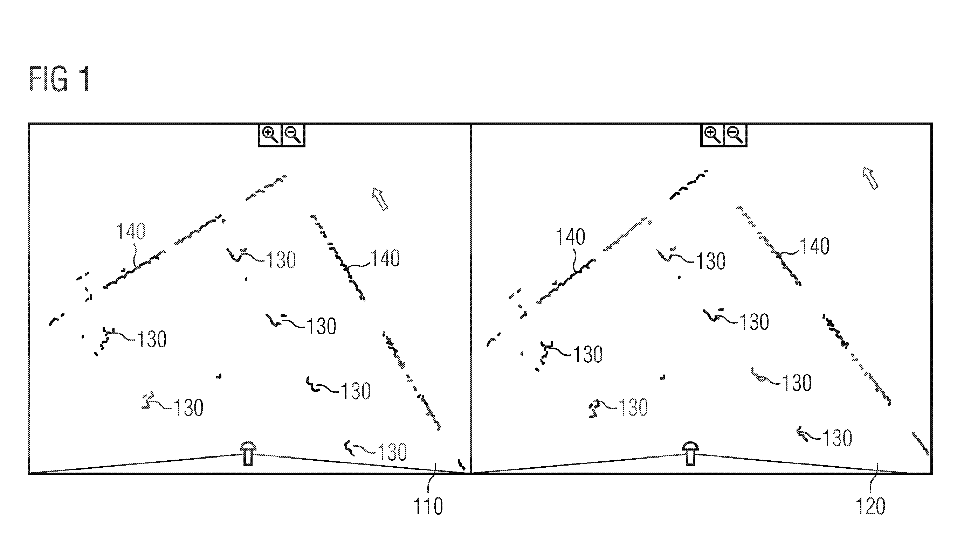

Figur 1 zeigt zwei Scans 110, 120. Wie aus dem genannten Stand der Technik bekannt, ist ein Scan ein geometrisches zweidimensionales oder dreidimensionales Abbild der Umgebung der mobilen Einheit 510. Der Scan besteht in der Regel aus einer Menge von Messwerten, welche beispielsweise in Polarkoordinaten angegeben sind. Hierbei werden die einzelnen Messwerte als Scanpunkte bezeichnet. Die Scanpunkte können in absolute kartesische Koordinaten umgerechnet werden. Eine solche Darstellung in kartesischen Koordinaten ist in Figur 1 für die Scans 110 und 120 gezeigt. In den Scans 110, 120 sind jeweils Säulen 130 und Wände 140 zu erkennen.

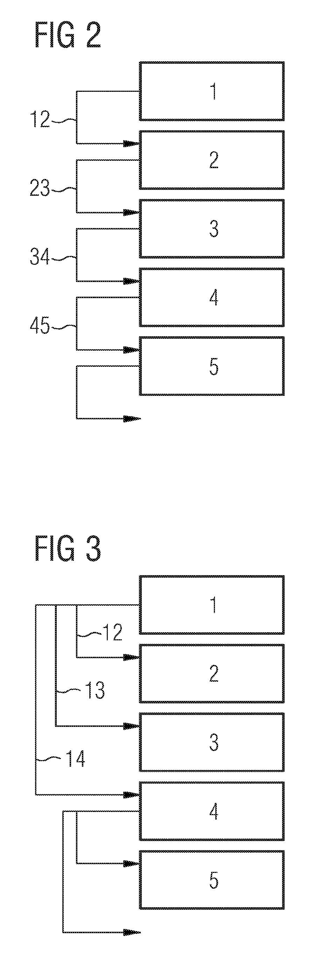

Scanmatching bedeutet, einen Scan so zu drehen und zu verschieben, dass eine maximale Überlappung etwa mit einem zweiten Scan entsteht. Bei dem in Figur 2 gezeigten Fall müsste der Scan 120 etwas im Uhrzeigersinn gedreht werden, um eine maximale Überlappung mit dem Scan 110 zu erzielen.

Nachdem die Drehung und Verschiebung des Scans 120 ermittelt wurde, lässt sich somit eine Relativposition ableiten, welche die relative Position und Orientierung der mobilen Einheit 510 zum Zeitpunkt des Scans 120 gegenüber dem Zeitpunkt des Scans 110 beschreibt. Auf diese Weise kann der mobilen Einheit 510 durch fortwährendes Scanmatching eine lokale Orientierung ermöglicht werden.

Figur 2 zeigt eine Verarbeitung von Scans gemäß dem Stand der Technik. Im Rahmen des hier vorgenommenen Scanmatchings wird ein erster Scan 1 einem Vergleich 12 mit einem zweiten Scan 2 unterzogen. Der Vergleich 12 erfolgt hierbei mit einem herkömmlichen Scanmatchingverfahren. Aus dem Vergleich 12 wird eine Relativposition der mobilen Einheit 510 zum Zeitpunkt des zweiten Scans 2 gegenüber der Position zum Zeitpunkt des ersten Scans 1 bestimmt. Dies bedeutet in der Praxis eine Änderung des Aufenthaltsortes und der Orientierung. Anschließend wird der zweite Scan 2 einem Vergleich 23 mit einem folgenden Scan 3 unterzogen. Hierbei wird eine Relativposition der mobilen Einheit 510 zum Zeitpunkt des folgenden Scans 3 gegenüber der Position zum Zeitpunkt des zweiten Scans 2 bestimmt. In gleicher Weise erfolgen Vergleiche 34, 45 der folgenden Scans 3, 4, 5. Dieses Verfahren ist sehr ungenau, da mit jedem Vergleich Fehler aufsummiert werden.

Aufgrund dieser Ungenauigkeiten werden bei den aus dem Stand der Technik bekannten Verfahren als Grundlage für die Bestimmung der Relativposition üblicherweise Radsensoren verwendet, um eine Geschwindigkeit der mobilen Einheit 510 aus Radumdrehungen pro Zeiteinheit sowie eine Winkelgeschwindigkeit der mobilen Einheit 510 aus einer unterschiedlichen Geschwindigkeit der Räder links und rechts zu bestimmen. Alternativ oder ergänzend wird oft eine Infrastruktur verwendet, wobei etwa auf GPS-Satelliten, reflektierende Streifen oder Magnete für die Bestimmung der Relativposition zurückgegriffen wird. Weiterhin wird häufig eine Karte genutzt, mit der aktuelle Sensormessungen abgeglichen werden.

Aus dem Stand der Technik sind weiterhin Verfahren bekannt, welche auf diesen Informationen aufsetzend die Relativposition einer mobilen Einheit durch Vergleich von Scans der Umgebung bestimmen. Solche Verfahren zur Bestimmung einer Relativposition erfordern jedoch immer zusätzlich Informationen anderer Sensoren, etwa einer Odometrie, die durch das jeweilige Verfahren qualitativ verbessert werden.
Die aus dem Scanmatching berechnete Relativbewegung wird im Stand der Technik also dazu genutzt, etwa die Genauigkeit radbasierter Odometrie zu verbessern.

Nachteilig an den genannten Verfahren wirkt sich aus, dass Radsensoren teuer sind, etwa wenn sie nachgerüstet werden müssen, und dass Alternativen wie Infrastruktur oder Kartendaten oft nicht oder zumindest zeitweise nicht zur Verfügung stehen. Weiterhin sind die bekannten Verfahren häufig zu ungenau. Insbesondere beim Scanmatching werden zu viele Fehler aufsummiert. Es sind zwar Verfahren bekannt, welche die Fehler im Scanmatching minimieren können, diese haben jedoch quadratische Komplexität, weshalb sie nur offline, also nicht während der Fahrt der mobilen Einheit zur Orientierung, eingesetzt werden können.

Es stellt sich somit die Aufgabe, ein Verfahren zur Bestimmung einer Relativposition einer mobilen Einheit durch Vergleich von Scans einer Umgebung anzugeben, welches hohe Genauigkeit und Recheneffizienz erzielt.

Diese Aufgabe wird durch das Verfahren nach Anspruch 1, die mobile Einheit nach Anspruch 13, das Computerprogramm nach Anspruch 14 sowie den Computerlesbaren Datenträger nach Anspruch 15 gelöst. Bevorzugte Weiterbildungen ergeben sich aus den abhängigen Ansprüchen.

Bei dem Verfahren zur Bestimmung einer Relativposition einer mobilen Einheit durch Vergleich von Scans einer Umgebung werden fortlaufend Scans einer Umgebung der mobilen Einheit durch einen Abstandssensor aufgenommen und in einem Speicher abgelegt. Weiterhin vergleicht eine Recheneinheit einen ersten Scan mit einem zweiten Scan, wobei eine Relativposition der mobilen Einheit zum Zeitpunkt des zweiten Scans gegenüber einer Position zum Zeitpunkt des ersten Scans bestimmt wird. Das Verfahren ist dadurch gekennzeichnet, dass die Recheneinheit den ersten Scan iterativ mit folgenden Scans vergleicht, wobei eine neue Relativposition der mobilen Einheit zum Zeitpunkt des jeweiligen folgenden Scans gegenüber der Position zum Zeitpunkt des ersten Scans bestimmt wird und wobei die jeweils zuletzt ermittelte Relativposition als a-priori-Information berücksichtigt wird.

Die mobile Einheit ist eingerichtet, das genannte Verfahren auszuführen.

Das Computerprogramm führt das genannte Verfahren aus, wenn es in einem Prozessor abgearbeitet wird.

Auf dem Computerlesbaren Datenträger ist ein Computerprogramm gespeichert, welches das genannte Verfahren ausführt, wenn es in einem Prozessor abgearbeitet wird.

Durch Berücksichtigung der jeweils zuletzt ermittelten Relativpositionen als a-priori-Information kann die Tatsache genutzt werden, dass bei ausreichendem Überlapp der einzelnen Scans in Verbindung mit der a-priori-Positionsschätzung aus anderen Vergleichen eine Ungenauigkeit eines aktuellen Vergleichs auch für größere Zeitspannen nicht wächst. Hierbei ergibt sich ein Vorteil gegenüber dem Stand der Technik, da dort bei aufeinander folgenden Vergleichen von Scans Ungenauigkeiten bei der Bestimmung der Relativposition schnell aufaddiert werden und das Ergebnis unbrauchbar machen. Durch die Berücksichtigung der jeweils zuletzt ermittelten Relativposition als a-priori-Information wird es überhaupt erst möglich, Scans mit großem zeitlichen Abstand effizient und zuverlässig zu vergleichen und dabei eine genaue Relativposition zu bestimmen.

Das Verfahren setzt weder eine Infrastruktur wie GPS-Satelliten, reflektierende Streifen oder Magnete, noch eine Karte der Umgebung voraus. Es ist somit ohne Installationsaufwand sofort einsatzbereit und kann auch in Umgebungen arbeiten, die sich verändern, etwa einem Lager. Das Verfahren erreicht eine so hohe Genauigkeit, dass auf Odometrie-Daten verzichtet werden kann. Somit erübrigt sich gegebenenfalls eine teuere Nachrüstung von Radsensoren. Die hohe Genauigkeit des Verfahrens allein durch Scanmatching liefert auch dann einen entscheidenden Vorteil, wenn die genannten zusätzlichen Sensorinformationen oder Kartendaten zwar bereitgestellt werden, jedoch unvollständig sind oder zeitweise nicht zur Verfügung stehen.

Gemäß einer Weiterbildung vergleicht die Recheneinheit einen der folgenden Scans mit dem ersten Scan und zumindest einem weiteren Scan, wobei jeweils vorläufige Relativpositionen bestimmt werden. Mit Hilfe eines Korrekturfilters berechnet die Recheneinheit anschließend eine korrigierte Relativposition aus den vorläufigen Relativpositionen.

Diese Weiterbildung nutzt die Tatsache, dass sich jede Relativbewegung aus verschiedenen Ketten von Scanpaaren berechnen lässt. Durch Abgleich der vorläufigen Relativpositionen können Fehler erkannt, reduziert, aussortiert oder ausgemittelt werden.

Gemäß einer Ausführungsform ist der Abstandssensor ein Laserscanner.

Es sind auch andere Abstandssensoren wie etwa Ultraschall denkbar. Laserscanner zeichnen sich durch eine besonders hohe Genauigkeit und Zuverlässigkeit aus.

In einer Weiterbildung berechnet der Korrekturfilter die korrigierte Relativposition, indem er die vorläufigen Relativpositionen mittelt.

Diese Weiterbildung ist dann vorteilhaft, wenn die vorläufigen Relativpositionen einander ähneln.

In einer besonderen Weiterbildung geben die vorläufigen Relativpositionen jeweils eine Wahrscheinlichkeitsverteilung über die Position der mobilen Einheit an. Eine solche Wahrscheinlichkeitsverteilung kann im Falle einer Normalverteilung beispielsweise durch ein Ellipsoid repräsentiert und durch einen Kalman-Filter gemittelt werden.

Dies ist gerade dann vorteilhaft, wenn das Scanmatching Unsicherheiten etwa in Form einer Kovarianzmatrix bereitstellt.

In einer anderen Weiterbildung werden zumindest drei vorläufige Relativpositionen bestimmt, woraufhin der Korrekturfilter nur diejenigen vorläufigen Relativpositionen berücksichtigt, die untereinander gleich oder ähnlich sind.

Hierdurch wird es möglich, vorläufige Relativpositionen zu verwerfen, die einen großen Fehler enthalten.

Gemäß einer Ausführungsform wird anhand der a-priori-Information im Speicher nach einem früheren Scan mit einer früheren Position gesucht, welche der anhand der a-priori-Information vermuteten aktuellen Position der mobilen Einheit ähnlich ist. Anschließend wird der frühere Scan mit einem aktuellen Scan verglichen. Die aktuelle Position wird als die frühere Position wiedererkannt, wenn eine bei dem Vergleich ermittelte Übereinstimmung des früheren Scans mit dem aktuellen Scan einen vorgegebenen Schwellwert überschreitet.

Diese Ausführungsform bietet den Vorteil, dass die verglichenen Scans zeitlich weit auseinander liegen können. Der Vergleich kann über einige hundert Scans hinweg erfolgen. Es können auch mehrere frühere Scans gesucht und mit dem aktuellen Scan verglichen werden.

Gemäß einer weiteren Ausführungsform werden zusätzliche absolute Positionsinformationen als a-priori-Informationen berücksichtigt.

In diesem Fall können die Anforderungen bezüglich der Genauigkeit und Verfügbarkeit der absoluten Ortsinformationen gesenkt werden. Somit verringert sich der Aufwand für die Bereitstellung einer Infrastruktur oder von Kartendaten.

In einer Weiterbildung wird das Verfahren iterativ angewendet, wodurch unterschiedliche Ketten von Scanpaaren verglichen werden.

Die Iteration bietet den Vorteil, das Verfahren fortlaufend anzuwenden, ohne dass sich Fehler aufsummieren würden.

In einer weiteren Ausführungsform wird das Verfahren online angewendet während einer Fahrt der mobilen Einheit, wobei immer der aktuellste Scan verglichen wird.

Diese Ausführungsform ermöglicht eine Bestimmung der Relativposition in Echtzeit, wodurch sich die mobile Einheit zur Laufzeit orientieren kann.

In einer Weiterbildung beginnt das Verfahren neu, sobald eine Überdeckung des zuletzt verglichenen folgenden Scans mit dem ersten Scan einen vorgegebenen Schwellwert unterschreitet, ein bei dem Vergleich ermittelter Fehlerwert einen vorgegebenen Schwellwert überschreitet oder eine Entfernung zwischen den Positionen der mobilen Einheit zum Zeitpunkt des ersten Scans und des folgenden Scans eine Reichweite des Abstandssensors überschreitet. Anstelle des ersten Scans wird als Basis für die folgenden Vergleiche der folgende Scan herangezogen.

In einer besonderen Ausführungsform wählt die Recheneinheit mindestens ein Verfahren entsprechend den genannten Weiterbildungen und Ausführungsformen und führt es aus. Es werden nur Verfahren gewählt, die mit aktuell verfügbaren Rechenressourcen ausführbar sind.

Dies bietet den Vorteil, dass die vorhandenen Rechenressourcen optimal genutzt werden können. Die genannten Weiterbildungen des Verfahrens werden wahlweise ausgeführt, um die Genauigkeit der Bestimmung der Relativposition zu erhöhen.

Im Folgenden wird die Erfindung anhand von Ausführungsbeispielen näher erläutert, die in der Zeichnung schematisch dargestellt sind. Im einzelnen zeigt:
- Figur 1: zwei Scans,
- Figur 2: ein Scanmatchingverfahren gemäß dem Stand der Technik,
- Figur 3: ein Scanmatchingverfahren mit a-priori-Positionsschätzung,
- Figur 4: ein Scanmatching-Verfahren mit unterschiedlichen Ketten von Scanpaaren,
- Figur 5: eine mobile Einheit,
- Figur 6: zwei Scans mit Ellipsoiden.

Die Figuren 1, 2 und 5 wurden bereits bei der Diskussion des Standes der Technik erläutert.

Figur 3 zeigt ein Ausführungsbeispiel. Hier wird ein erster Scan 1 einem Vergleich 12 mit einem zweiten Scan 2 unterzogen. Hierbei wird eine Relativposition der mobilen Einheit 510 (vgl. Figur 5) zum Zeitpunkt des zweiten Scans 2 gegenüber der Position zum Zeitpunkt des ersten Scans 1 bestimmt. Die ermittelte Relativposition wird als Zwischenergebnis im Speicher 530 (vgl. Figur 5) abgelegt. Anschließend wird erneut der erste Scan 1 einem Vergleich unterzogen, diesmal jedoch mit einem folgenden Scan 3. Hierbei wird die als Zwischenergebnis gespeicherte zuletzt ermittelte Relativposition als a-priori-Information berücksichtigt.

Wie eine solche Berücksichtigung erfolgen kann, ist aus dem Stand der Technik wohlbekannt. Indem der Suchraum verkleinert oder die Datenmenge reduziert wird, werden Doppeldeutigkeiten eliminiert und die Effizienz des Verfahrens erhöht. Nur diejenigen Relativpositionen, die unter Berücksichtigung der a-priori-Information überhaupt möglich sind, müssen beim Scanmatching in Betracht gezogen werden. Weiterhin kann etwa ein Projektionsfilter verwendet werden, um Scanpunkte aus dem ersten Scan 1 zu entfernen, die entsprechend der a-priori-Information der zuletzt ermittelten Relativposition im folgenden Scan 3 vermutlich verdeckt sind oder nicht im Aufnahmebereich des folgenden Scans 3 liegen können.

In einem nächsten Schritt wird der erste Scan 1 einem Vergleich 14 mit einem folgenden Scan 4 unterzogen. Hierbei wird wiederum die zuletzt ermittelte Relativposition, in diesem Fall also diejenige, welche bei dem Vergleich 13 ermittelt wurde, als a-priori-Information berücksichtigt. Die a-priori-Information stellt somit ein Mittel zur Positionsschätzung dar, welches die Güte und Effizienz des Scanmatching erheblich verbessert. Wie in Figur 3 gezeigt, kann nun etwa ausgehend von dem folgenden Scan 4 eine neue Serie von Scan-Vergleichen beginnen. Auf diese Weise lässt sich das Verfahren iterieren um kontinuierlich, insbesondere auch zur Laufzeit bzw. während der Fahrt der mobilen Einheit 510, angewendet werden zu können.

Figur 4 zeigt ein weiteres Ausführungsbeispiel. Hier werden der erste Scan 1, der zweite Scan 2 sowie die folgenden Scans 3, 4, 5 wie im vorangegangenen Ausführungsbeispiel Vergleichen 12, 13, 14 unterzogen. Zusätzlich wird jedoch ein Vergleich 24 des zweiten Scans 2 mit dem folgenden Scan 4 vorgenommen. Die bei den Vergleichen 14 und 24 ermittelten Relativpositionen werden hierbei als vorläufige Relativpositionen betrachtet. Mithilfe eines Korrekturfilters wird anschließend eine korrigierte Relativposition aus den vorläufigen Relativpositionen berechnet.

Beispielsweise kann der Korrekturfilter die beiden vorläufigen Relativpositionen mitteln. Der Mittelwert erlaubt die Reduzierung von Fehlern. Es können auch weitere Paare von Scans gebildet und verglichen werden, wodurch zusätzliche vorläufige Relativposition für das Mitteln zur Verfügung stehen.

Im Rahmen des Scanmatching werden häufig Unsicherheiten mitgeliefert, welche beispielsweise als Kovarianzmatrix repräsentiert werden können. Eine Wahrscheinlichkeitsverteilung über die Position der mobilen Einheit 510 kann im Falle einer Normalverteilung in kartesischen Koordinaten als Ellipsoid repräsentiert werden. Diese Ellipsoide können beispielsweise über einen Kalman-Filter miteinander verrechnet und gemittelt werden. In Abhängigkeit von der Art der Wahrscheinlichkeitsverteilung können auch andere Filter gewählt werden, etwa ein Extended-Kalman-Filter.

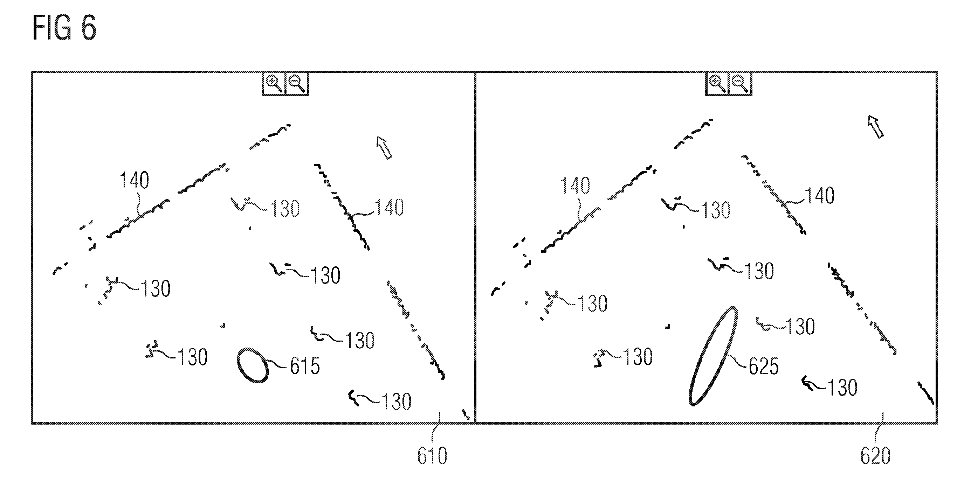

Figur 6 zeigt Scans 610 und 620 in kartesischen Koordinaten mit Wänden 140 und Säulen 130. Es sind hierbei Ellipsoide 615 und 625 eingezeichnet, welche jeweils eine Wahrscheinlichkeitsverteilung über die Position der mobilen Einheit 510 angeben, wie sie im Rahmen des Scanmatchingverfahrens für die Relativposition ermittelt werden kann.

In einem alternativen Ausführungsbeispiel werden zumindest drei vorläufige Relativpositionen aus unterschiedlichen Paaren und Scans und dem jeweiligen Vergleich gebildet. Zusätzlich zum in Figur 4 gezeigten Vergleich 14 und 24 könnte zum Beispiel noch der erste Scan 1 mit dem folgenden Scan 4 verglichen werden. Zur Bestimmung der Relativposition der mobilen Einheit 510 zum Zeitpunkt des folgenden Scans 4 stehen somit drei vorläufige Relativpositionen zur Verfügung. Wenn nun eine dieser vorläufigen Relativpositionen deutlich von den anderen beiden abweicht, so kann davon ausgegangen werden, dass bei dem entsprechenden Vergleich ein Fehler unterlaufen ist. In diesem Fall wird die entsprechende vorläufige Relativposition verworfen, so dass der Korrekturfilter nur die beiden anderen vorläufigen Relativpositionen berücksichtigt. Eine korrigierte Relativposition kann nun berechnet werden, indem beispielsweise die verbleibenden vorläufigen Relativpositionen miteinander gemittelt werden.

Das Verfahren kann auch anhand der Übereinstimmung oder Abweichung der vorläufigen Relativpositionen selbst entscheiden, ob diese gemittelt oder verworfen werden sollen.

Durch einen Vergleich zweier zeitlich weit auseinander liegender Scans wird es möglich, dass die mobile Einheit 510 einen bereits besuchten Ort wieder erkennt. Falls sich nämlich die mobile Einheit 510 wieder an der gleichen Position einfindet wie zum Zeitpunkt eines früheren Scans, so wird ein Vergleich mit einem aktuellen Scan eine besonders hohe Übereinstimmung liefern. Hierzu wird anhand der a-priori-Information im Speicher 530 nach einem früheren Scan mit einer früheren Position gesucht, welche der anhand der a-priori-Information vermuteten aktuellen Position der mobilen Einheit 510 ähnlich ist. Der frühere Scan wird daraufhin mit einem aktuellen Scan verglichen. Überschreitet die Übereinstimmung einen vorgegebenen Schwellwert, so wird die alte Position wieder erkannt.

Zusätzlich zu der beschriebenen relativen Positionsbestimmung können dem Verfahren auch absolute Positionsinformationen im Rahmen der a-priori-Information zugeführt werden. Die absoluten Positionsinformationen können beispielsweise über eine Infrastruktur (GPS-Satelliten, reflektierende Streifen, Magnete ...) oder eine Karte bereitgestellt werden.

Gemäß einem Ausführungsbeispiel wird das Scanmatching iterativ fortlaufend angewendet, wodurch unterschiedliche Ketten von Scanpaaren verglichen werden. In Figur 4 ist dies angedeutet, da der folgende Scan 4 nun die Grundlage für weitere Vergleiche mit folgenden Scans 5 bereitstellt. Durch die fortwährende Anwendung des Scanmatchings kann das Verfahren auch online während einer Fahrt der mobilen Einheit 510 zur Anwendung kommen, wobei immer der aktuellste Scan der Umgebung der mobilen Einheit 510 am Vergleich teilnimmt und die aktuelle Relativposition der mobilen Einheit 510 zu deren Orientierung bestimmt wird.

Durch die Bildung von Ketten von Scanpaaren, die verglichen werden, erzielt das Scanmatchingverfahren eine geringe algorithmische Komplexität, da die Anzahl der nötigen Vergleiche gering gehalten wird. Dadurch wird eine online-Anwendung während der Fahrt der mobilen Einheit 510 möglich. Wollte man hingegen alle Scans untereinander vergleichen, so hätte ein entsprechender Algorithmus quadratische Komplexität, weshalb er nur offline ausführbar wäre.

Wie in Figur 3 und 4 gezeigt, beginnt das Verfahren neu, sobald eine Überdeckung des zuletzt verglichenen folgenden Scans 4 mit dem ersten Scan 1 einen vorgegebenen Schwellwert unterschreitet, ein bei dem Vergleich ermittelter Fehlerwert einen vorgegebenen Schwellwert überschreitet oder eine Entfernung zwischen den Positionen der mobilen Einheit 510 zum Zeitpunkt des ersten Scans 1 und des folgenden Scans 4 eine Reichweite des Abstandssensors 520 überschreitet. Anstelle des ersten Scans 1 wird als Basis für die folgenden Vergleiche der folgende Scan 4 herangezogen.

In Abhängigkeit von aktuell verfügbaren Rechenressourcen kann die Rechenheit 540 die einzelnen Varianten aus den beschriebenen Ausführungsbeispielen hinzunehmen oder weglassen, um die Relativposition in bestmöglicher Genauigkeit und dennoch in Echtzeit zu berechnen.

## Patentansprüche

1. Verfahren zur Bestimmung einer Relativposition einer mobilen Einheit durch Vergleich von Scans einer Umgebung,
- bei dem fortlaufend Scans einer Umgebung der mobilen Einheit (510) durch einen Abstandssensor (520) aufgenommen und in einem Speicher (530) abgelegt werden,
- bei dem eine Recheneinheit (540) einen ersten Scan (1) mit einem zweiten Scan (2) vergleicht, wobei eine Relativposition der mobilen Einheit (510) zum Zeitpunkt des zweiten Scans (2) gegenüber einer Position zum Zeitpunkt des ersten Scans (1) bestimmt wird,
**dadurch gekennzeichnet, dass**
die Recheneinheit (540) den ersten Scan (1) iterativ mit folgenden Scans (3, 4) vergleicht, wobei eine neue Relativposition der mobilen Einheit (510) zum Zeitpunkt des jeweiligen folgenden Scans (3, 4) gegenüber der Position zum Zeitpunkt des ersten Scans (1) bestimmt wird und wobei die jeweils zuletzt ermittelte Relativposition als a-priori-Information berücksichtigt wird.

2. Verfahren nach Anspruch 1,
- bei dem die Recheneinheit (540) einen der folgenden Scans (3, 4) mit dem ersten Scan (1) und zumindest einem weiteren Scan vergleicht, wobei jeweils vorläufige Relativpositionen bestimmt werden,
- bei dem die Recheneinheit (540) mithilfe eines Korrekturfilters eine korrigierte Relativposition aus den vorläufigen Relativpositionen berechnet.

3. Verfahren nach Anspruch 1,
- bei dem der Abstandssensor (520) ein Laserscanner ist.

4. Verfahren nach Anspruch 2,
- bei dem der Korrekturfilter die korrigierte Relativposition berechnet, indem er die vorläufigen Relativpositionen mittelt.

5. Verfahren nach Anspruch 4,
- bei dem die vorläufigen Relativpositionen jeweils eine Wahrscheinlichkeitsverteilung über die Position der mobilen Einheit (510) angeben.

6. Verfahren nach Anspruch 2,
- bei dem zumindest drei vorläufige Relativpositionen bestimmt werden, und bei dem der Korrekturfilter nur diejenigen vorläufigen Relativpositionen berücksichtigt, die untereinander gleich oder ähnlich sind.

7. Verfahren nach Anspruch 1,
- bei dem anhand der a-priori-Information im Speicher (530) nach einem früheren Scan mit einer früheren Position gesucht wird, welche der anhand der a-priori-Information vermuteten aktuellen Position der mobilen Einheit (510) ähnlich ist,
- bei dem der frühere Scan mit einem aktuellen Scan verglichen wird,
- bei dem die aktuelle Position als die frühere Position wiedererkannt wird, wenn eine bei dem Vergleich ermittelte Übereinstimmung des früheren Scans mit dem aktuellen Scan einen vorgegebenen Schwellwert überschreitet.

8. Verfahren nach Anspruch 1,
bei dem zusätzlich absolute Positionsinformationen als a-priori-Information berücksichtigt werden.

9. Verfahren nach Anspruch 2,
iterativ angewendet, wodurch unterschiedliche Ketten von Scanpaaren verglichen werden.

10. Verfahren nach Anspruch 1,
online angewendet während einer Fahrt der mobilen Einheit (510), wobei immer der aktuellste Scan verglichen wird.

11. Verfahren nach Anspruch 1,
- bei dem das Verfahren neu beginnt, sobald eine Überdeckung des zuletzt verglichenen folgenden Scans (4) mit dem ersten Scan (1) einen vorgegebenen Schwellwert unterschreitet, ein bei dem Vergleich ermittelter Fehlerwert einen vorgegebenen Schwellwert überschreitet oder eine Entfernung zwischen den Positionen der mobilen Einheit (510) zum Zeitpunkt des ersten Scans (1) und des folgenden Scans (4) eine Reichweite des Abstandssensors (520) überschreitet, und
- bei dem anstelle des ersten Scans (1) als Basis für die folgenden Vergleiche der folgende Scan (4) herangezogen wird.

12. Verfahren nach Anspruch 1 und 10,
- bei dem die Recheneinheit (540) ein Verfahren nach mindestens einem weiteren der vorangegangenen Ansprüche wählt und ausführt,
- bei dem nur Verfahren gewählt werden, die mit aktuell verfügbaren Rechenressourcen ausführbar sind.

13. Mobile Einheit,
welche dazu eingerichtet ist, ein Verfahren nach einem der vorangegangen Ansprüche auszuführen.

14. Computerprogramm,
welches ein Verfahren nach Anspruch 1 bis 12 ausführt, wenn es in einem Prozessor abgearbeitet wird.

15. Computerlesbarer Datenträger,
auf dem ein Computerprogramm gespeichert ist, welches ein Verfahren nach Anspruch 1 bis 12 ausführt, wenn es in einem Prozessor abgearbeitet wird.
